(19)

Europäisches
Patentamt
European
Patent Office
Office européen
des brevets

(11) **EP 4 080 372 A1**

(12) **EUROPEAN PATENT APPLICATION**

(43) Date of publication:
**26.10.2022 Bulletin 2022/43**

(21) Application number: **22167106.8**

(22) Date of filing: **07.04.2022**

(51) International Patent Classification (IPC):
**G06F 11/36** (2006.01)     **G06F 8/33** (2018.01)

(52) Cooperative Patent Classification (CPC):
**G06F 11/362; G06F 8/33; G06F 11/3672**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.04.2021 US 202117235868**

(71) Applicant: **Fujitsu Limited
Kawasaki-shi, Kanagawa 211-8588 (JP)**

(72) Inventors:
• **MAHAJAN, Sonal**
**Fremont, CA, 94539 (US)**
• **PRASAD, Mukul R.**
**San Jose, CA, 95129 (US)**

(74) Representative: **Hoffmann Eitle
Patent- und Rechtsanwälte PartmbB
Arabellastraße 30
81925 München (DE)**

(54) **SEMI-SUPERVISED BUG PATTERN REVISION**

(57)     Obtaining a plurality of posts from one or more websites, each post including a respective buggy snippet of source code that includes a corresponding error. The operations also include generating a plurality of bug patterns from the plurality of posts in which each respective bug pattern corresponds to a respective buggy snippet and indicates a corresponding bug scenario that leads to the corresponding error of the respective buggy snippet that corresponds to the respective bug pattern. The operations further include determining similarities with respect to the respective bug patterns and selecting, based on the similarity determinations, a first bug pattern of the plurality of bug patterns for revision. In addition, a revised bug pattern is obtained that is a revised version of the first bug pattern.

*FIG. 1A*

EP 4 080 372 A1

## Description

### FIELD

The embodiments discussed in the present disclosure are related to semi-supervised bug pattern revision.

### BACKGROUND

Software developer forums present a rich, hybrid knowledge base of natural language descriptions and code snippets related to developing software programs such as fixing errors (also referred to as bugs or errors) in the software programs. Software development tools may be configured to perform machine analysis operations to analyze posts of the forums to identify which posts may be relevant to correcting particular errors.

The subject matter claimed in the present disclosure is not limited to embodiments that solve any disadvantages or that operate only in environments such as those described above. Rather, this background is only provided to illustrate one example technology area where some embodiments described in the present disclosure may be practiced.

### SUMMARY

Operations may include obtaining a plurality of posts from one or more websites, each post including a respective buggy snippet of source code that includes a corresponding error. The operations may also include generating a plurality of bug patterns from the plurality of posts in which each respective bug pattern corresponds to a respective buggy snippet and indicates a corresponding bug scenario that leads to the corresponding error of the respective buggy snippet that corresponds to the respective bug pattern. The operations may also include determining similarities with respect to the respective bug patterns and selecting, based on the similarity determinations, a first bug pattern of the plurality of bug patterns for revision. In addition, the operations may include obtaining a revised bug pattern that is a revised version of the first bug pattern.

The objects and advantages of the embodiments will be realized and achieved at least by the elements, features, and combinations particularly pointed out in the claims.

Both the foregoing general description and the following detailed description are given as examples and are explanatory and are not restrictive of the invention, as claimed.

### BRIEF DESCRIPTION OF THE DRAWINGS

Example embodiments will be described and explained with additional specificity and detail through the use of the accompanying drawings in which:

FIG. 1A is a diagram representing an example environment related to semi-supervised bug pattern revision;
FIG. 1B illustrates example bug patterns for example types of errors that may be included in the bug pattern library of FIG. 1A;
FIG. 2 illustrates a block diagram of an example computing system that may be used to generate bug patterns;
FIG. 3 is a flowchart of an example method of obtaining revised bug patterns;
FIG. 4 is a flowchart of an example method of automatically generating a bug pattern;
FIG. 5 is a flowchart of an example method of determining occurrence rates associated with different bug pattern types;
FIG. 6 is a flowchart of an example method of determining dissimilarity scores associated with different unvisited bug patterns; and
FIG. 7 is a flowchart of an example method of clustering posts based on revised bug patterns.

### DESCRIPTION OF EMBODIMENTS

Software developer forums may include posts in which users may post a question related to an error (also referred to as a "bug") in code and in which other users may post answers on how to correct the error. Further, the question posts may include a code snippet of the source code that includes the error (referred to as "buggy snippets"). The buggy snippets may include different conditions or characteristics of the corresponding source code that may lead to occurrence of the error.

Some automated developer tools have been configured to generate bug patterns from the buggy snippets. The bug patterns may include genericized versions of the buggy snippets that include different patterns of scenarios (referred to as "bug scenarios") that may lead to the different types of errors included in the buggy snippets. For example, the bug scenarios may include the different conditions or characteristics of the corresponding source code that may lead to a respective type of bug occurring in a corresponding software program. The bug patterns may relate to corresponding bug scenarios in that the respective bug patterns may include programmatic elements and/or relationships that create the different conditions or characteristics of the bug scenarios to which the bug patterns may correspond.

In these or other embodiments, the bug patterns may be compared against source code that is being developed (referred to as "code under test") and that includes errors to identify which bug patterns may correspond to which errors in the code under test. In some embodiments, the developer tools may use the bug patterns that correspond to the errors in the code under test to identify or generate repairs (also referred to as "patches") for the errors. For example, patches that correspond to a particular bug pattern that corresponds to a particular error in the code under test may be identified as potential repair for the particular error.

Some embodiments described in the present disclosure relate to methods and systems of generating and/or improving a library of bug patterns (referred to as a "bug pattern library") based on posts within developer forums. In particular, operations may include improving on automatically generated bug patterns through a semi-supervised process in which a computing system intelligently selects posts and corresponding bug patterns for revision by a human developer. Reference to a bug pattern being "revised" may include making changes to portions of the bug pattern or completely rewriting the bug pattern. As discussed in further detail below, the computing system may be configured to select different posts and corresponding bug patterns in a manner that reduces redundancies in the work performed by the human developers and/or increase the diversity of the different types of bug patterns that have undergone revision.

The intelligent selection may allow for the computing system to generate a more useful and accurate bug pattern library than what would otherwise be achieved. For example, due to the large number of posts related to each of the different error types on developer forums (e.g., hundreds to thousands) it would be impossible for a human to be able to improve and revise each corresponding bug pattern. As such, according to one or more embodiments of the present disclosure, the technological field of software development may be improved by configuring a computer system in a manner in which the computing system is able to better compile a bug pattern library. Additionally, in some embodiments, the system may facilitate the development of software programs by improving the bug patterns that may be used for identifying corresponding patches.

Embodiments of the present disclosure are explained with reference to the accompanying drawings.

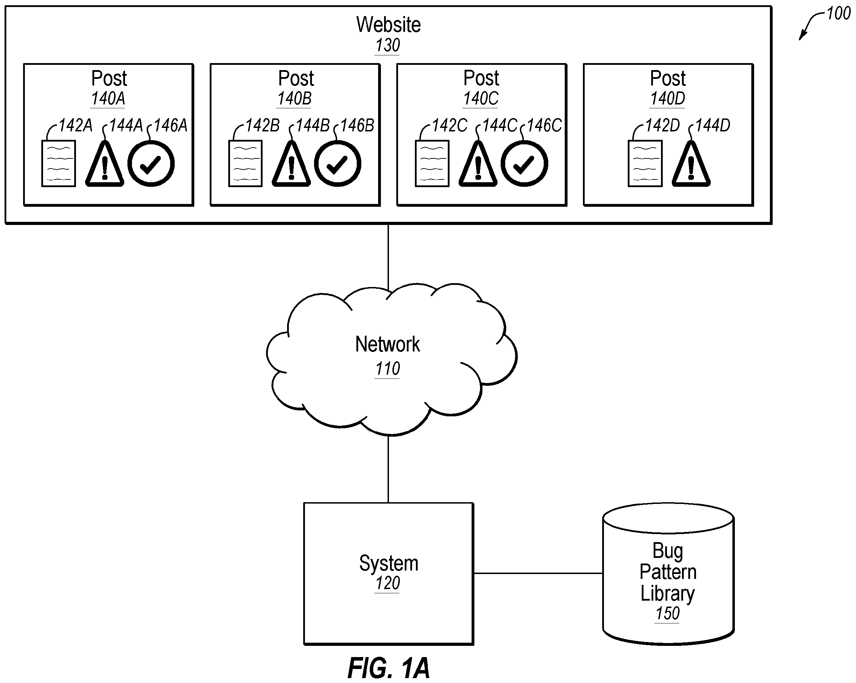

FIG. 1A is a diagram representing an example environment 100 related to semi-supervised revision of a bug pattern, arranged in accordance with at least one embodiment described in the present disclosure. The environment 100 may include a network 110, a system 120, a website 130, and a bug pattern library 150.

The network 110 may include any communication network configured for communication of signals between any of the components (e.g., the system 120 and the website 130) of the environment 100. The network 110 may be wired or wireless. The network 110 may have numerous configurations including a star configuration, a token ring configuration, or another suitable configuration. Furthermore, the network 110 may include a local area network (LAN), a wide area network (WAN) (e.g., the Internet), and/or other interconnected data paths across which multiple devices may communicate. In some embodiments, the network 110 may include a peer-to-peer network. The network 110 may also be coupled to or include portions of a telecommunications network that may enable communication of data in a variety of different communication protocols.

In some embodiments, the network 110 includes or is configured to include a BLUETOOTH® communication network, a Z-Wave® communication network, an Insteon® communication network, an EnOcean® communication network, a wireless fidelity (Wi-Fi) communication network, a ZigBee communication network, a HomePlug communication network, a Power-line Communication network, a message queue telemetry transport (MQTT) communication network, a MQTT-sensor (MQTT-S) communication network, a constrained application protocol (CoAP) communication network, a representative state transfer application protocol interface (REST API) communication network, an extensible messaging and presence protocol (XMPP) communication network, a cellular communications network, any similar communication networks, or any combination thereof for sending and receiving data. The data communicated in the network 110 may include data communicated via short messaging service (SMS), multimedia messaging service (MMS), hypertext transfer protocol (HTTP), direct data connection, wireless application protocol (WAP), e-mail, smart energy profile (SEP), ECHONET Lite, OpenADR, or any other protocol that may be implemented with the system 120, the website 130, a cloud server communication, or a gateway.

The website 130 may include any applicable website on the Internet. Alternatively or additionally, in some embodiments the website 130 may include an internal repository or resource, such as a collection of documents on an internal intranet site. For example, in some embodiments, the website 130 may include a discussion forum where users may post questions and other users may post answers. For example, one user may post a question that includes a buggy snippet of source code of a software program that includes an error. Additionally or alternatively, another user may post an answer that may include an example snippet of source code that may be a patch to the error in the buggy snippet of the question post. In these and other embodiments, multiple users may post answers to the question and/or one user may post multiple answers. In some embodiments, the user who posted the question may select one answer as resolving the error the user experienced.

In some embodiments, users of the website 130 may vote on different answers posted by users. While FIG. 1A depicts a single website 130, in some embodiments there may be multiple websites 130. In some embodiments, the website 130 may include multiple pages or multiple posts, such as a post 140A, a post 140B, a post 140C, and a post 140D (collectively the posts 140). While the website 130 is depicted with four posts 140, in some embodiments, the website 130 may include hundreds of posts 140, thousands of posts 140, hundreds of thousands of posts 140, or any number of posts 140. Furthermore, while the posts 140 are depicted as being associated with a single website 130, in some embodiments, some of the posts 140 may be associated with a first website and other posts 140 may be associated with a second website. For example, the post 140A and the post 140B may be associated with the website 130 while the post 140C and the post 140D may be associated with a different website.

In these and other embodiments, the posts 140 may each be associated with a same software program. Additionally or alternatively, two or more of the posts 140 may be associated with different software programs. Additionally or alternatively, each of the posts 140 may be associated with a different software program. For example, the post 140A may relate to a software program 142A, the post 140B may relate to a software program 142B, the post 140C may relate to a software program 142C, and the post 140D may relate to a software program 142D (collectively, the software programs 142). In some embodiments, reference to the software programs 142 may include references to lines of code of software programs. For example, the software program 142A may include multiple lines of a larger software program and may not include every line in the larger software program. In some embodiments, the software programs 142 may be the lines of code in larger software programs that include errors. Thus, references to the software programs 142 is not limited to entire programs. In these and other embodiments, the software programs 142 may each differ from each other and may differ from the software program 122. For example, the software programs 142 may each have a different purpose, have a different author, be written in a different programming language, or include different error types than the software program 122.

In some embodiments, the software programs 142 may be associated with different questions. For example, a user of the website 130 may create the post 140A on the website 130. As part of the post 140A, the user may add the software program 142A and may ask a question associated with the software program 142A. For example, the user may have experienced an error while writing the software program 142A. To obtain assistance, the user may post a buggy snippet of the software program 142A to the website 130 as part of the post 140A. The user may write a question to ask other users of the website 130 how the user may remediate the error and/or ask other users what is causing the error in the software program 142A.

In some embodiments, the software program 142A may include an error 144A, the software program 142B may include an error 144B, the software program 142C may include an error 144C, and the software program 142D may include an error 144D (collectively the errors 144). In some embodiments, each of the errors 144 may be different errors from each other. For example, the error 144A may be a run-time error, the error 144B may be a logic error, the error 144C may be a compilation error, and the error 144D may be a run-time error distinct from the error 144A. Alternatively or additionally, in some embodiments, one or more of the errors 144 may be the same error, may be related errors, and/or may be similar errors. For example, in some embodiments, the error 144A may be an index out of bounds error in the C++ programming language while the error 144C may be an index out of bounds error in the Java programming language. In this example, the error 144A and the error 144C may be similar errors. In some embodiments, errors 144 may be determined to be similar errors even if the errors are manifested and/or handled differently in different environments. For example, an array index out of bounds access may be manifested and handled differently during runtime in a C++ environment verses a Java environment, even though the root cause of the behavior may be the same, i.e. attempting to access an array out of its prescribed bound of indices.

In some embodiments, one or more of the posts 140 may include a patch. For example, the post 140A may include a patch 146A, the post 140B may include a patch 146B, and the post 140C may include a patch 146C (collectively the patches 146). In some embodiments, one or more posts 140 may not include an associated patch 146. For example, the post 140D may not include a patch. In some embodiments, the patches 146 may indicate how to remediate the corresponding errors 144, e.g., the patch 146A may remediate the errors 144A such that, after applying the patch 146A to the software program 142A, the software program 142A no longer has the errors 144A. In some embodiments, the patches 146 may include example snippets of source code that may be applied to a source of the errors 144 in the software programs 142. In some embodiments, one or more of the posts 140 may include multiple patches 146. For example, the post 140B may include multiple patches 146B. In these and other embodiments, different users of the website 130 may rank or vote for different patches 146B, such that one patch 146B may receive the most positive votes. In these and other embodiments, one of the patches 146B may be selected as the chosen patch 146B by the user who created the post 140B based on the chosen patch solving that user's problem.

In some embodiments, the posts 140 may include questions. For example, the software programs 142 may be integrated into a question posted by a user of the website 130. For example, a first user may have written the software program 142A and have encountered the error 144A. The first user may then create the post 140A as a question post on the website 130 that includes the buggy snippet of the software program 142A, the errors 144A and details of the errors 144A, and a request for others to help resolve the errors 144A. In these and other embodiments, the patch 146A may include an answer to the first user's question. For example, in these and other embodiments, a second user may post an answer to the question that includes, as the patch 146A, an example code snippet that may correct the error of the buggy snippet included in the post 140A.

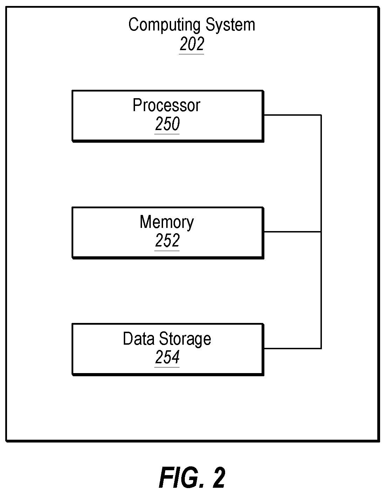

The system 120 may include a computer-based hardware system that includes a processor, memory, and communication capabilities. The system 120 may be coupled to the network 110 to communicate data with any of the other components of the environment 100. Some examples of the system 120 may include a mobile phone, a smartphone, a tablet computer, a laptop computer, a desktop computer, a set-top box, a virtual-reality device, or a connected device, etc. Additionally or alternatively, the system 120 may include one or more processor-based computing systems. For example, the system 120 may include one or more hardware servers or other processor-based computing devices configured to function as a server. The system 120 may include memory and network communication capabilities. In some embodiments, the system 120 may include a computing system such as described below with respect to FIG. 2. Additionally or alternatively, in some embodiments, the system 120 may include one or more modules configured to perform and/or direct the operations described with respect to the system 120.

In some embodiments, the system 120 may be configured to access the website 130 to obtain posts 140 from the website 130. In some embodiments, system 120 may be configured to compile the bug pattern library 150 and/or revise the bug pattern library 150 based on the posts 140. For example, the system 120 may be configured to generate bug patterns based on the buggy snippets included in the posts 140.

In some embodiments, the bug patterns and corresponding bug scenarios of the may include common scenarios that may lead to common types of errors. For example, some example scenarios may include unsupported operation exceptions, concurrent modification exceptions, class cast exceptions, illegal arguments exceptions, etc.

In some embodiments, the bug patterns of the bug pattern library 150 may be formatted according to a particular domain specific language (DSL) that is based on a syntax of a particular software language. For example, one or more bug patterns that may provide bug scenarios related to Java may be formatted according to a particular DSL that is based on a Java-like syntax. In some embodiments, the bug pattern library 150 may include bug patterns formatted according to different DSL's that correspond to different software languages. In these or other embodiments, different bug patterns may correspond to same types of bugs but may be formatted according to different DSL's. Additionally or alternatively, some bug patterns may be specific to certain types of software languages and therefore such bug patterns may only be formatted according to the respective DSL's of the software languages to which they may relate. The formatting of the bug patterns according to certain DSLs may be such that the bug patterns may be structured as genericized code snippets of source code of corresponding software programs.

In these or other embodiments, the formats of the DSL's may have some differences as compared to the syntax of the corresponding software language. For example, some of the syntax rules may be relaxed in a particular DSL as compared to a corresponding software language. For instance, a Java DSL may not have some of the strict formalism of Java such as enclosure of statements in a method and/or class.

As another example, the particular DSL may support semantic abstractions in which a particular semantic abstraction may be used to represent different program elements that are semantically equivalent with respect to each other in the context of the bug scenario of the respective bug pattern and in the context of the type of bug. In other words, the semantic abstractions encode a family of program elements that play an equivalent role for a specific kind of bug and its bug scenario, but may not be generally equivalent to each other.

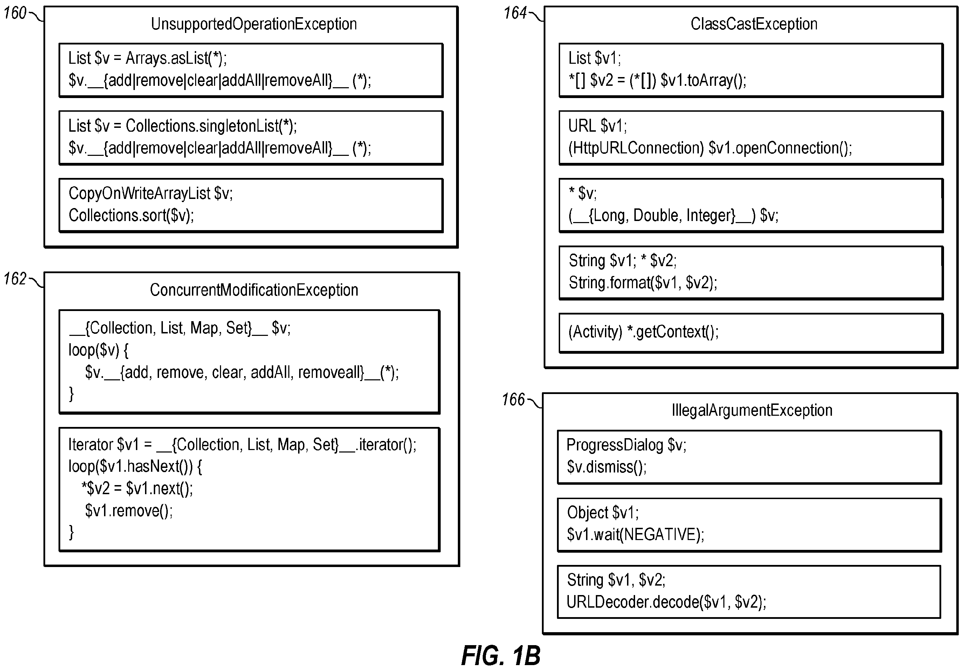

For example, FIG. 1B illustrates an example bug pattern 160 for an unsupported operation exception, which may be a runtime exception bug. In the bug pattern 160, the methods "add()", "remove()", "clear()" "addAll()", and "removeAll" may each be deemed as semantic equivalents because in the context of an unsupported operation exception each of these methods represent a structural modification of a given "List" by adding or removing one or more of the elements of the "List." However, generally speaking some of the methods are actually performing different or even opposite operations-e.g., "add()" and "remove()" are actually performing opposite operations—and thus may not be considered semantic equivalents outside of the context of the bug scenario of the bug pattern 160.

Additionally or alternatively, the particular DSL may support a wildcard character that may match different program elements that may differ in one or more ways. For example, in the bug pattern 160 of FIG. 1B, the argument to the method "Arrays.asList()" is a wildcard "*", as it may represent different program elements such as variables, creation of new array objects, or a return from a method call.

In these or other embodiments, the particular DSL may support numeric constraints on values. For example, FIG. 1B illustrates an example bug pattern 166 of an illegal argument exception. An argument to a method "wait()" of the bug pattern 166 is a number value in which an illegal argument exception may occur if this value is less than zero. To represent this scenario, the argument to the method "wait()" is specified with the numeric constraint of "NEGATIVE".

As indicated above, FIG. 1B illustrates some example bug patterns for some example types of errors that may be included in the bug pattern library 150 and that may be configured according to a Java DSL. For example, FIG. 1B illustrates the example bug pattern 160 for an unsupported operation exception, an example bug pattern 162 for a concurrent modification exception, an example bug pattern 164 for a class cast exception, and the example bug pattern 166 for an illegal argument exception, which may each be errors associated with Java code.

In these or other embodiments, the system 120 may be configured to select certain bug patterns for revision (e.g., by a human developer). In some embodiments, the selection of certain bug patterns may include selecting the corresponding posts 140 for review. Additionally or alternatively, the selection of the certain bug patterns may include suggesting the certain bug patterns for revision and/or suggesting the corresponding posts 140 for review (e.g., to help facilitate the revision process).

The revisions may include improvements to the bug patterns such as improved abstraction to better genericize the corresponding bug scenario, etc. As indicated above, the revisions may include changes to portions of the automatically generated bug patterns or a complete rewrite of the bug patterns by a human. Further, the selection process may be such that the amount of human involvement may be reduced. For example, the selection process may be based on popularity determinations of different types of bug patterns, in which more popular bug patterns may be selected for revision over less popular bug patterns. Therefore, bug patterns that are most likely to be used to help repair software programs may be given a higher priority for revision than less common bug patterns. In some embodiments, the popularity determinations may be based on user votes associated with posts 140 that correspond to the respective bug patterns.

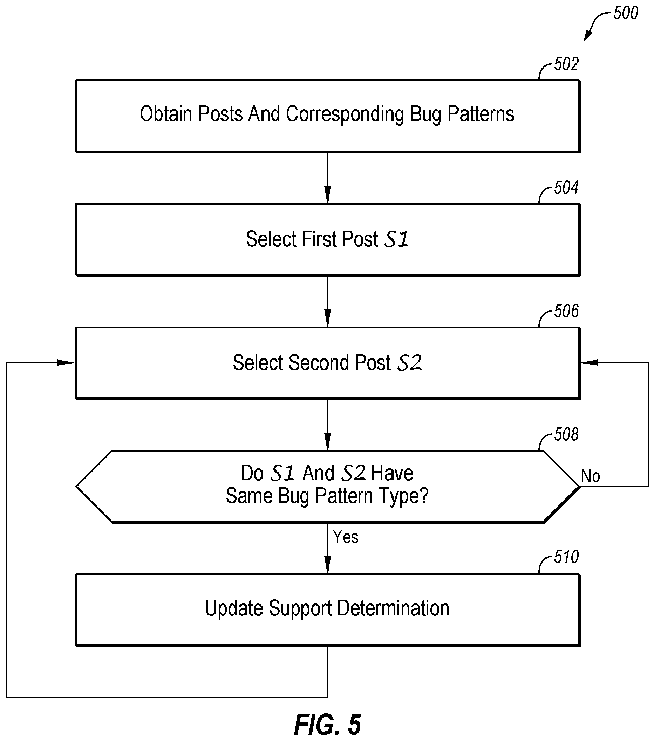

Additionally or alternatively, the selection process may be based on similarities determined with respect to the bug patterns. For example, as disclosed in further detail, in some embodiments an occurrence rate of different bug pattern types may be determined based on how many bug patterns relate to the same bug scenario (e.g., based on how many bug patterns are the same or similar). For instance, a set of bug patterns that are determined to satisfy a similarity threshold with respect to each other may be considered as having a same bug pattern type. Further, the number of bug patterns that correspond to a same bug pattern type may be counted to determine a respective occurrence rate of the corresponding bug patterns. In some embodiments, a bug pattern that corresponds to a relatively high occurrence rate may be selected for revision over a bug pattern that corresponds to a relatively low occurrence rate. In some embodiments, the system 120 may be configured to determine the occurrence rate using one or more operations described in further detail below with respect to FIG. 5

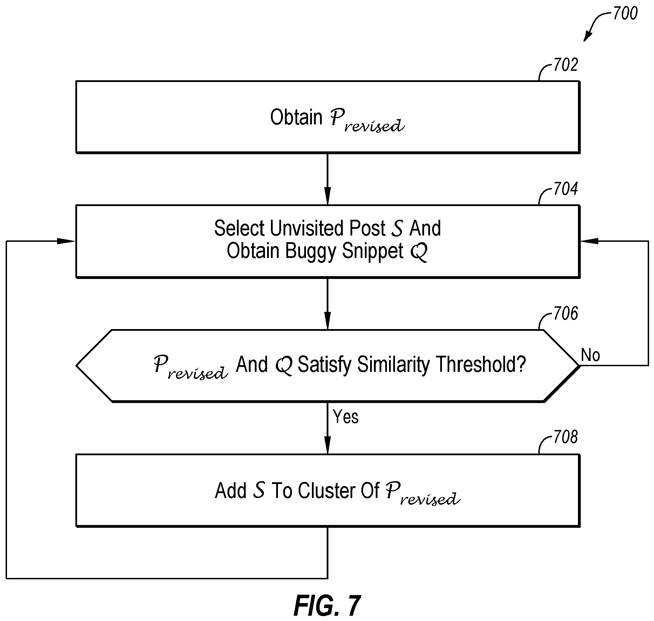

As another example, the similarities may be used to improve the diversity of different bug patterns selected for revision. For example, in some embodiments, the system 120 may be configured to determine a similarity between the revised bug pattern and one or more buggy snippets of the posts 140. In these or other embodiments, the buggy snippets used as part of such similarity analyses may correspond to posts 140 and/or bug patterns that have not been revised or reviewed (e.g., by a human developer). In these or other embodiments, the system 120 may be configured to determine a similarity between the revised bug pattern and one or more other bug patterns that have not been revised or reviewed (e.g., by a human developer). Posts or Bug patterns that have not been revised or reviewed may be respectively referred to as "unvisited posts" or "unvisited bug patterns." In these or other embodiments, unvisited posts (and their corresponding bug patterns) or unvisited bug patterns that satisfy a similarity threshold with respect to the revised bug pattern may be grouped into a cluster with the revised bug pattern. In these or other embodiments, the unvisited bug patterns that are associated with the cluster (e.g., unvisited bug patterns that are directly added to the cluster or bug patterns that correspond to unvisited posts added to the cluster) may be removed from consideration for revision. Further, the unvisited posts that are added to the cluster may be removed from consideration as selection for review. As such, redundancies in review and revision may be reduced. In some embodiments, the system 120 may be configured to identify the clusters using one or more operations described in further detail below with respect to FIG. 7

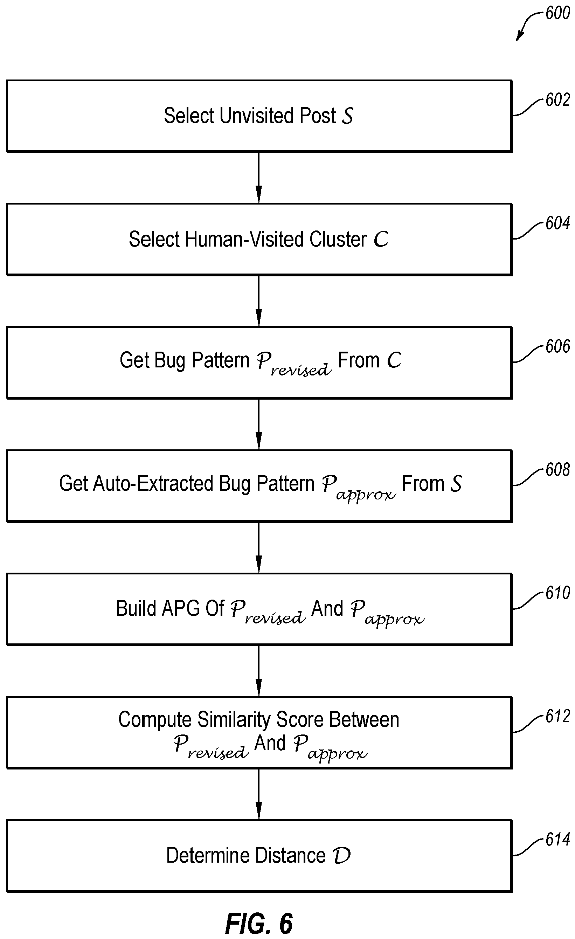

Additionally or alternatively, the similarity determinations may indicate which of the unvisited bug patterns may be most different from the revised bug patterns. In these or other embodiments, the system 120 may be configured to determine which unvisited bug patterns to select for potential revision based on whether a respective similarity satisfies a dissimilarity threshold, in which a respective similarity may be determined between the unvisited bug patterns and each of one or more of the revised bug patterns. As such, the system 120 may be configured to select different bug patterns of wide ranging different types to improve the diversity of revised bug patterns that are included in the bug pattern library150. In some embodiments, the system 120 may be configured to determine the dissimilarities using one or more operations described in further detail below with respect to FIG. 6.

The system 120 may also be configured to obtain the revised bug patterns and include them in the bug pattern library 150. Accordingly, the bug patterns included in the bug pattern library 150 may be improved over those that may have previously been included. Further, by intelligently selecting which bug patterns and associated posts 140 to suggest for revision and review, the system 120 may be configured to improve the efficiency of the process of generation of the bug pattern library 150. Further, the intelligent selection may be such that the number of bug patterns included in the bug pattern library 150 may be reduced, which may improve the storage efficiency of the bug pattern library and free up computing and storage resources.

Modifications, additions, or omissions may be made to FIG. 1A without departing from the scope of the present disclosure. For example, the environment 100 may include more or fewer elements than those illustrated and described in the present disclosure. For example, in some embodiments, the system 120 and the operations discussed relative to the system 120 may be performed by a single device or distributed across different systems. In these and other embodiments, the environment 100 may include the network 110 and one or more systems, including the system 120 and the website 130, which may be communicatively coupled via the network 110.

FIG. 2 illustrates a block diagram of an example computing system 202 that may be used to generate bug patterns, according to at least one embodiment of the present disclosure. The computing system 202 may be configured to implement or direct one or more operations associated with the system 120 of FIG. 1A, in some embodiments. The computing system 202 may include a processor 250, a memory 252, and a data storage 254. The processor 250, the memory 252, and the data storage 254 may be communicatively coupled.

In general, the processor 250 may include any suitable special-purpose or general-purpose computer, computing entity, or processing device including various computer hardware or software modules and may be configured to execute instructions stored on any applicable computer-readable storage media. For example, the processor 250 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data. Although illustrated as a single processor in FIG. 2, the processor 250 may include any number of processors configured to, individually or collectively, perform or direct performance of any number of operations described in the present disclosure. Additionally, one or more of the processors may be present on one or more different electronic devices, such as different servers.

In some embodiments, the processor 250 may be configured to interpret and/or execute program instructions and/or process data stored in the memory 252, the data storage 254, or the memory 252 and the data storage 254. In some embodiments, the processor 250 may fetch program instructions from the data storage 254 and load the program instructions in the memory 252. After the program instructions are loaded into memory 252, the processor 250 may execute the program instructions.

For example, in some embodiments, one or more modules related to bug pattern generation and revision may be included in the data storage 254 as program instructions. The processor 250 may fetch the program instructions of the modules from the data storage 254 and may load the program instructions of the modules in the memory 252. After the program instructions of the modules are loaded into memory 252, the processor 250 may execute the program instructions such that the computing system 202 may implement the operations (e.g., perform the operations and/or cause performance of the operations) associated with the modules as directed by the instructions.

The memory 252 and the data storage 254 may include computer-readable storage media for carrying or having computer-executable instructions or data structures stored thereon. Such computer-readable storage media may include any available media that may be accessed by a general-purpose or special-purpose computer, such as the processor 250. By way of example, and not limitation, such computer-readable storage media may include tangible or non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to store particular program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 250 to perform a certain operation or group of operations.

Modifications, additions, or omissions may be made to the computing system 202 without departing from the scope of the present disclosure. For example, in some embodiments, the computing system 202 may include any number of other components that may not be explicitly illustrated or described.

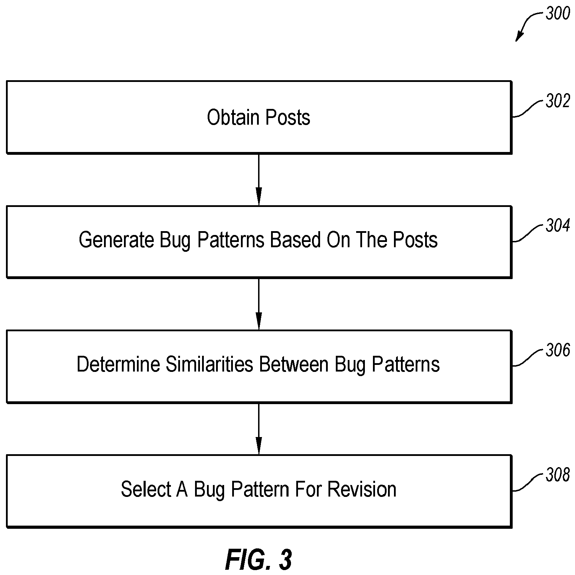

FIG. 3 is a flowchart of an example method 300 of obtaining revised bug patterns, according to at least one embodiment described in the present disclosure. The method 300 may be performed by any suitable system, apparatus, or device. By way of example, the system 120 of FIG. 1A, or the computing system 202 of FIG. 2 (e.g., as directed by one or more modules in some embodiments) may perform one or more of the operations associated with the method 300. Although illustrated with discrete blocks, the steps and operations associated with one or more of the blocks of the method 300 may be divided into additional blocks, combined into fewer blocks, or eliminated, depending on the particular implementation.

At block 302, posts related to bugs in software programs may be obtained. The posts may be obtained from any suitable website or repository. Further, the posts may include question posts and corresponding answer posts in some embodiments. Additionally or alternatively, the question posts may include buggy snippets that may include the corresponding errors. Further, one or more of the answer posts may include example snippets that may be patches that repair the errors of the buggy snippets of the question posts to which the answer posts respectively correspond.

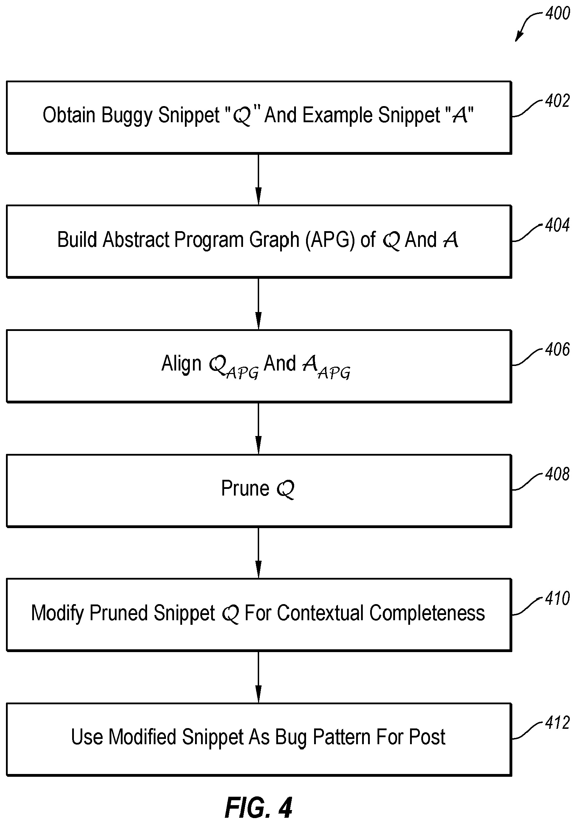

At block 304, bug patterns associated with the obtained posts may be obtained. As indicated above, the bug patterns may be genericized versions of the respective buggy snippets and may include programmatic elements and/or relationships that create the different conditions or characteristics of corresponding bug scenarios In some embodiments, the bug patterns may be automatically generated. In some embodiments, the automatically generated bug patterns may be generated by performing one or more operations of FIG. 4, described in detail below. In these or other embodiments, the obtained bug patterns may include one or more revised bug patterns that have already undergone revision (e.g., by a human developer).

Additionally or alternatively, the obtained bug patterns may include one or more clusters of bug patterns that have been grouped together. In these or other embodiments, each cluster may include a revised bug pattern and one or more automatically generated bug patterns that satisfy a similarity threshold with respect to the revised bug pattern. In some embodiments, the clustering may be determined by performing one or more operations of FIG. 7 and/or FIG. 8, described in detail below.

At block 306, similarities may be determined with respect to the different bug patterns. For example, in some embodiments, a similarity determination may be made between each of one or more respective automatically generated bug patterns and each of one or more other automatically generated bug patterns. Such similarity determinations may be used to determine an occurrence rate for the different bug pattern types in some embodiments. Further, such similarity determinations may be referred to as "occurrence similarity determinations" in that the similarity determinations may be used to determine occurrence rates. In these or other embodiments, one or more operations of FIG. 5 described in further detail below may be used to determine the similarities and the occurrence rate.

Additionally, in embodiments, a similarity determination may be made between a revised bug pattern and each of one or more unvisited bug patterns (e.g., automatically generated bug patterns that have not been selected for review). Additionally or alternatively, as indicated above, and described in further detail below, in some embodiment the similarity determination may be used to determine which of the unvisited bug patterns satisfy a dissimilarity threshold with respect to the revised bug pattern, such as discussed in detail below. The similarity determinations used to determine which unvisited bug patterns satisfy the dissimilarity threshold may be referred to as "dissimilarity determinations". In some embodiments, one or more operations of FIG. 6 may be used to determine the dissimilarity determinations.

At block 308, one or more unvisited bug patterns may be selected for revision. Additionally or alternatively, an unvisited bug pattern may be selected for revision by selecting its corresponding post for review. In some embodiments, the selected bug pattern may be selected based on the similarity determinations made at block 306.

For example, as indicated above, the occurrence similarity determinations may be made to determine respective occurrence rates with respect to the different bug pattern types. In these or other embodiments, the unvisited bug patterns with the highest occurrence rates may be selected for revision. For instance, the unvisited bug patterns may be ranked based on their respective occurrence rates in which the greater the occurrence rate, the higher the ranking. The highest ranked unvisited bug patterns according to occurrence rates may be weighted higher for selection than the lower ranked unvisited bug patterns.

Additionally or alternatively, bug patterns that satisfy an occurrence rate threshold may be selected for revision. For example, those having an occurrence rate that is above a particular number may be selected for revision.

In these or other embodiments, the dissimilarity determinations may be used to select the selected bug patterns. For example, unvisited bug patterns that are determined to be most dissimilar from already revised bug patterns, as indicated by the dissimilarity determinations, may be selected for revision. For instance, the unvisited bug patterns may be ranked based on their respective dissimilarities with the revised bug patterns in which the greater the dissimilarity, the higher the ranking. The highest ranked unvisited bug patterns according to dissimilarity may be weighted higher for selection than the lower ranked unvisited bug patterns.

In these or other embodiments, unvisited bug patterns that satisfy a dissimilarity threshold may be selected for revision. For example, a dissimilarity score may be determined for each of the unvisited bug patterns and those with a dissimilarity score that satisfies the dissimilarity threshold may be selected.

In some embodiments, a combination of the occurrence rates and the dissimilarity determinations may be used to select one or more of the unvisited bug patterns. For example, unvisited bug patterns that satisfy both the occurrence rate threshold and the dissimilarity threshold may be selected for revision.

In these or other embodiments, the selected bug patterns may be selected based on the clustering of bug patterns. For example, as indicated above, the clusters may include unvisited bug patterns and associated unvisited posts that have been determined to be the same as or similar to a corresponding revised bug pattern. As such, revision of unvisited bug patterns included in clusters may result in redundancies of work performed. Therefore, in some embodiments, the unvisited bug patterns that are not associated with a cluster may be considered for selection for revision. As such, bug patterns and/or their associated posts that are associated with a respective cluster may be removed from selection in response to being included in a cluster. In some embodiments, after being selected for revision, the selected bug pattern may be revised such that a revised version of the selected bug pattern may be obtained.

One skilled in the art will appreciate that, for this and other processes, operations, and methods disclosed herein, the functions and/or operations performed may be implemented in differing order. Furthermore, the outlined functions and operations are only provided as examples, and some of the functions and operations may be optional, combined into fewer functions and operations, or expanded into additional functions and operations without detracting from the essence of the disclosed embodiments. In some embodiments, the method 300 may include additional blocks or fewer blocks.

FIG. 4 is a flowchart of an example method 400 of automatically generating a bug pattern, according to at least one embodiment described in the present disclosure. The method 400 may be performed by any suitable system, apparatus, or device. By way of example, the system 120 of FIG. 1A, or the computing system 202 of FIG. 2 (e.g., as directed by one or more modules in some embodiments) may perform one or more of the operations associated with the method 400. Although illustrated with discrete blocks, the steps and operations associated with one or more of the blocks of the method 400 may be divided into additional blocks, combined into fewer blocks, or eliminated, depending on the particular implementation. In some embodiments, one or more of the operations of the method 400 may be performed with respect to block 304 of FIG. 3 based on one or more posts obtained at block 302 of FIG. 3.

At block 402, a buggy snippet "Q" may be obtained from a question post of the posts. In these or other embodiments, an example snippet "A" may be obtained from an answer post that corresponds to the question post. The example snippet "A" may be a patch for the buggy snippet "Q".

In some embodiments, the answer post may be selected for obtaining the example snippet "A" from multiple answer posts that correspond to the question post. In these or other embodiments, the answer post may be selected in response to the answer post being indicated as an acceptable solution to the error of the question post. For example, an author of the question post may mark the answer post as being an acceptable solution. Additionally or alternatively, the answer post may be selected based on user votes associated with the different answer posts. For example, the selected answer post may have a highest number of user votes as compared to the other answer posts that correspond to the question post.

At block 404, a first abstract program graph (APG) may be generated for "Q" and (referred to as "$Q_{APG}$"). In some embodiments, the first abstract program graph may be generated by obtaining an abstract syntax tree of "Q". Further, the abstract syntax tree may be modified into the first abstract program graph by a process of simplification, type inference (also referred to as "concretization"), and abstraction of the corresponding abstract syntax tree.

For example, as part of simplification, the abstract syntax tree may be parsed and compressed to make the tree compact and readable. In some embodiments, parsing and compressing the abstract syntax tree may include combining multiple nodes of the abstract syntax tree into a single node in a resulting abstract tree representation. For example, an abstract syntax tree may include a node for every token in a software program. For instance, a statement "int a;" in source code may be represented in an abstract syntax tree as a series of nodes including statement nodes, expression nodes, variable nodes, etc. As part of simplification, the nodes in the abstract syntax tree associated with the statement "int a;" in source code may be parsed and compressed into a single node in the abstract tree representation, a "declare (int, a)" node. Parsing the source code may include dividing a statement in source code into a construct, a type (i.e., a variable type), and a variable name. For example, constructs may include functions of statements in source code. For the "declare (int, a)" node above, the construct may be "declare", the type may be "int", and the variable name may be "a". Constructs may include loops such as "for", "for-each", "while", conditions such as "if", declarations and constructors, methods such as "delete" and "insert", etc. Types may include "integers" ("int"), floating point numbers ("float"), strings, Booleans, collections, etc.

During type inference, data types of variables may be inferred. Type inference may include determining an inferred type of a variable based on the usage of the variable in the source code. For example, variables used in loops such as "for" loops may be inferred to be integers even if the variable is not explicitly defined as such in the software program, abstract syntax tree, and/or compressed abstract syntax tree. As an additional example, a statement in the source code may include "if (flag)". The data type of the variable "flag" may not be identified in the source code; however, based on the usage of the variable "flag" in the "if" statement, it may be inferred that "flag" is a variable of the "Boolean" type. Thus, the statement "if (flag)" may be converted in the tree representation to a "root" node, an additional "declare (Boolean, flag)" node, and an "if (flag)" node. Similarly, type inference may involve inferring a method scope or caller and inferring variable values. During type inference, nodes may be added to the abstract tree representation that may not be present in the abstract syntax tree.

During abstraction, differing constructs may be generalized to a single construct. In these and other embodiments, data types of variables may be abstracted. During abstraction, primitive data types, such as integers, floating point numbers, characters, strings, and Booleans, may remain without abstraction. Some data types may include application specific and/or user defined types. These data types may be converted into generic type variables. Alternatively or additionally, during abstraction, identifier names may be abstracted. For example, a first variable name "list" may be abstracted to a name "$v1" and a second variable name "s" may be abstracted to "$v2." Alternatively or additionally, during abstraction, constructs may be generalized. For example, "for", "for-each", and "while" may each be abstracted to a "loop" construct. Additionally or alternatively, during abstraction, duplicate subtrees may be abstracted and refactored.

Additional details regarding the process of simplification, type inference and abstraction of the abstract syntax tree may be found in U.S. Patent Application No. 16/550,069, filed on August 23, 2019 and incorporated by reference in the present disclosure in its entirety. Further, the first abstract program graph may be generated using any other applicable technique other than that described above.

Additionally or alternatively, at block 404 a second abstract program graph may be generated for "$A$" and (referred to as "$A_{APG}$"). The second abstract program graph may be generated in an analogous manner as the generation of the first abstract program graph in some embodiments.

At block 406, the first abstract program graph and the second abstract program graph may be aligned. Additionally or alternatively, the aligning may be performed to determine an overlap between the first abstract program graph and the second abstract program graph. For example, the aligning may identify which nodes of the first abstract program graph and of the second abstract program graph overlap with each other. The aligning may be performed using any suitable technique. For example, in some embodiments, the aligning may be based on determining tree edit distances between the first abstract program graph and the second abstract program graph.

Tree edit distance may be a representation of the degree of similarity and/or dissimilarity of different trees (e.g., between the first abstract program graph and the second abstract program graph). For example, the tree edit distance may be computed. Based on the tree edit distance, the alignment between the first abstract program graph and the second abstract program graph be determined, e.g., it may be determined which nodes of first abstract program graph correspond to which nodes of the second abstract program graph. The tree edit distance may be determined based on the minimum number of operations needed to convert one of the two trees into the other tree. In these and other embodiments, the operations may include deletion operation (e.g., where a first tree includes a node the second tree lacks), an addition operation (e.g., where the first tree lacks a node the second tree includes), and a match operation (where a node on the first tree matches a node on the second tree in terms of content but the contexts of the two nodes may not necessarily match completely), among other operations.

At block 408, the buggy snippet "$Q$" may be pruned based on the alignment between the first abstract program graph and the second abstract program graph. For example, lines of code of the buggy snippet "$Q$" that do not correspond to nodes of the first abstract program graph "$Q_{APG}$" that overlap (e.g., match) with a respective node of the second abstract program graph the buggy snippet "$A_{APG}$" may be removed.

At block 410, the pruned buggy snippet "$Q$" may be modified to improve contextual completeness of the pruned buggy snippet "$Q$". For example, one or more variable declarations may be missing from the pruned buggy snippet "$Q$" (e.g., that were removed during pruning). In some embodiments, one or more of the missing variable declarations may be added. In these or other embodiments, the pruned buggy snippet "$Q$" may be syntactically incomplete. For example, the pruned buggy snippet "$Q$" may be missing syntactically complete program constructs such as missing a catch block for an existing try block. In some embodiments, operations may be performed to complete such program constructs.

At block 412, the modified snippet may be used as the bug pattern that corresponds to the question post that includes the buggy snippet "$Q$" and respective answer posts obtained at block 402. In some embodiments, the method 400 may be performed in an iterative manner for any number of posts to obtain any number of bug patterns.

One skilled in the art will appreciate that, for this and other processes, operations, and methods disclosed herein, the functions and/or operations performed may be implemented in differing order. Furthermore, the outlined functions and operations are only provided as examples, and some of the functions and operations may be optional, combined into fewer functions and operations, or expanded into additional functions and operations without detracting from the essence of the disclosed embodiments. In some embodiments, the method 400 may include additional blocks or fewer blocks.

FIG. 5 is a flowchart of an example method 500 of determining occurrence rates associated with different bug pattern types, according to at least one embodiment described in the present disclosure. The method 500 may be performed by any suitable system, apparatus, or device. By way of example, the system 120 of FIG. 1A, or the computing system 202 of FIG. 2 (e.g., as directed by one or more modules in some embodiments) may perform one or more of the operations associated with the method 500. Although illustrated with discrete blocks, the steps and operations associated with one or more of the blocks of the method 500 may be divided into additional blocks, combined into fewer blocks, or eliminated, depending on the particular implementation. In some embodiments, one or more of the operations of the method 500 may be performed with respect to blocks 306 and 308 of FIG. 3 based on one or more posts and bug patterns obtained at blocks 302 and 304 of FIG. 3.

The method 500 may include a block 502, at which different posts of one or more websites may be obtained. The posts may include questions posts and corresponding answer posts in some embodiments. In these or other embodiments, a respective bug pattern may be obtained for corresponding posts. In the context of the method 500 reference to a "post" to which a bug pattern may correspond may include the question post that includes the buggy snippet used to generate the corresponding bug pattern as well as one or more of the answer posts that correspond to the question post.

At block 504, a first post "*S1*" may be selected from the obtained posts. At block 506, a second post "*S2*" may be selected.

At block 508, it may be determined whether "*S1*" and "*S2*" have a same bug pattern type. For example, a first bug pattern associated with "*S1*" may be obtained and a second bug pattern associated with "*S2*" may be obtained. In these and other embodiments, a first abstract program graph may be obtained for the first bug pattern and a second abstract program graph may be obtained for the second bug pattern. In some embodiments, the first abstract program graph and the second abstract program graph may be obtained in an analogous manner as described above with respect to block 404 of FIG. 4.

In these or other embodiments, the first abstract program graph and the second abstract program graph may be compared to determine whether the first bug pattern and the second bug pattern satisfy an occurrence similarity threshold. In some embodiments, it may be determined that the first bug pattern and the second bug pattern satisfy the occurrence similarity threshold in response to the first abstract program graph and the second abstract program graph being isomorphic. Additionally or alternatively, it may be determined that the first bug pattern and the second bug pattern satisfy the occurrence similarity threshold in response to the first abstract program graph being subsumed by the second abstract program graph as a sub-graph of the second abstract program graph, or vice versa.

In response to the first bug pattern and the second bug pattern satisfying the occurrence similarity threshold, it may be determined that the first bug pattern and the second bug pattern have a same bug pattern type. Conversely, in response to the first bug pattern and the second bug pattern not satisfying the occurrence similarity threshold, it may be determined that the first bug pattern and the second bug pattern do not have a same bug pattern type.

In response to the first bug pattern and the second bug pattern having a same bug pattern type, the method 500 may proceed from block 508 to block 510. At block 510 a support determination may be updated with respect to "*S1*". In some embodiments, the support determination may be a tally as to the number of posts that have bug patterns that are determined to be of the same type as the first bug pattern that corresponds to "*S1*". For example, the support determination may be incremented by "1" in response to the second bug pattern being determined to be of the same type as the first bug pattern at block 508. The support determination may be used as the occurrence rate of the first bug pattern in some embodiments. Following block 510, the method 500 may return to block 506, at which another post that has not been compared with the first post "*S1*" may be selected.

Returning to block 508, in response to the first bug pattern and the second bug pattern not having a same bug pattern type, the method 500 may proceed from block 508 back to block 506. Upon the return to block 506 from block 508, another post that has not been compared with the first post "*S1*" may be selected.

In some embodiments, one or more of operations 506, 508, and 510 may be repeated until every post has been compared against the first post "*S1*" to determine the support of the first post "*S1*" and consequently determine the corresponding occurrence rate of the bug pattern type of the first bug pattern. Additionally or alternatively, the method 500 may be repeated with respect to any number of other posts that may be selected as the first post "*S1*" and compared against any number of other posts to make other support determinations and consequent occurrence rate determinations.

One skilled in the art will appreciate that, for this and other processes, operations, and methods disclosed herein, the functions and/or operations performed may be implemented in differing order. Furthermore, the outlined functions and operations are only provided as examples, and some of the functions and operations may be optional, combined into fewer functions and operations, or expanded into additional functions and operations without detracting from the essence of the disclosed embodiments. In some embodiments, the method 500 may include additional blocks or fewer blocks. Further, the method 500 is merely given as an example technique for determining occurrence rates of bug pattern types. However, any number of other techniques may be used within the scope of the present disclosure.

FIG. 6 is a flowchart of an example method 600 of determining dissimilarity scores associated with different unvisited bug pattern, according to at least one embodiment described in the present disclosure. The method 600 may be performed by any suitable system, apparatus, or device. By way of example, the system 120 of FIG. 1A, or the computing system 202 of FIG. 2 (e.g., as directed by one or more modules in some embodiments) may perform one or more of the operations associated with the method 600. Although illustrated with discrete blocks, the steps and operations associated with one or more of the blocks of the method 600 may be divided into additional blocks, combined into fewer blocks, or eliminated, depending on the particular implementation. In some embodiments, one or more of the operations of the method 600 may be performed with respect to blocks 306 and 308 of FIG. 3 based on one or more posts and bug patterns obtained at blocks 302 and 304 of FIG. 3.

The method 600 may include a block 602, at which an unvisited post "*S*' may be obtained. The unvisited post may be a post that has not been analyzed with respect to selection for review or for revision of a corresponding bug pattern. The unvisited post may include a question post and corresponding answer posts in some embodiments.

At block 604, an unvisited cluster "$C$" may be selected. In some embodiments, the cluster "$C$" may be referred to as "unvisited" based on the cluster "$C$" not having been analyzed against other posts and/or corresponding bug patterns for a dissimilarity determination. The cluster "$C$" may be a cluster of unvisited posts and/or corresponding bug patterns that have been grouped with a revised bug pattern "$P_{revised}$" such as described in further detail below with respect to FIG. 7.

At block 606, the revised bug pattern "$P_{revised}$" may be obtained. In these or other embodiments, the revised bug pattern "$P_{revised}$" may be obtained in response to corresponding to the selected cluster "$C$".

At block 608, an automatically generated bug pattern "$P_{approx}$" may be obtained for the selected post "$S$". In some embodiments, the bug pattern "$P_{approx}$" may be obtained using one or more operations of the method 400 of FIG. 4, as described above.

At block 610, a first abstract program graph may be obtained for the revised bug pattern "$P_{revised}$" and a second abstract program graph may be obtained for the bug pattern "$P_{approx}$". In some embodiments, the first abstract program graph and the second abstract program graph may be obtained in an analogous manner as described above with respect to block 404 of FIG. 4.

At block 612, a similarity score between the revised bug pattern "$P_{revised}$" and the bug pattern "$P_{approx}$" may be determined. In these or other embodiments, the similarity score may be determined based on the first abstract program graph and the second abstract program graph.

For example, the first abstract program graph and the second abstract program graph may be aligned to determine overlapping nodes of the first abstract program graph and the second abstract program graph. In some embodiments, the aligning and consequent determination of the overlapping nodes may be performed in an analogous manner as described above with respect to block 406 of FIG. 4. In these or other embodiments, the similarity score may be determined based on the overlapping nodes.

For example, in some embodiments a respective similarity score may be determined with respect to one or more overlapping nodes of the first abstract program graph and the second abstract program graph. In some embodiments, a respective similarity score may be determined between each of the overlapping nodes. The respective similarity score may indicate a degree of similarity between the corresponding identified overlapping nodes. In some embodiments, the respective similarity score may be weighted.

In some embodiments, the respective similarity score may be computed based on multiple factors. For example, the respective similarity score may be based on construct similarity, type similarity, and variable-use relationship similarity, among other factors. In some embodiments, construct similarity may be present when overlapping nodes in abstract tree representation include the same construct. For example, when both overlapping nodes are "declare" constructs, there may be construct similarity. As discussed above, constructs may include "declare", "constructor", "loop", "method", "if", among others. In some embodiments, type similarity may be determined in response to determining there is construct similarity. In these and other embodiments, type similarity may be present when overlapping nodes in abstract tree representation include the same construct and the same type. For example, when both overlapping nodes are "declare" constructs and include "integer" types, there may be type similarity. As discussed above, types may include "Boolean", "collection", "string", "integer", "float", among others. In some embodiments, variable-use similarity may be determined in response to determining there is construct similarity and type similarity. In these and other embodiments, variable-use similarity may be present when a variable is used in similar manners in both overlapping nodes. For example, when a variable is used in a loop and a remove method in both the abstract tree representation of the software program code snippet and the pattern, there may be variable-use similarity. In some embodiments, variable-use similarity may be determined using the Jaccard index.

In some embodiments, the respective similarity score may be calculated as *Similarity Score* = (*weight$_A$* × *construct similarity*) + (*weight$_B$* × *type similarity*) + (*weight$_c$* × *variable-use relationship similarity*). In these and other embodiments, the construct similarity may be a number of overlapping nodes with matching constructs. In these and other embodiments, the type similarity may be a number of overlapping nodes with both matching constructs and matching types. In these and other embodiments, the variable-use relationship similarity may be a number of instances in which variables are used in the same or similar situations. Alternatively or additionally, in some embodiments, the variable-use relationship similarity may be measured as the Jaccard index, J, which, as discussed above, may be determined as the size of the intersection of the number of places a variable is used in the code snippet of the software program, $V_{SP}$ and number of places the corresponding variable appearing in a matching node in the pattern is used in the pattern, $V_P$, divided by the size of the union,

$$J(V_{SP}, V_P) = \frac{|V_{SP} \cap V_P|}{|V_{SP} \cup V_P|} = \frac{|V_{SP} \cap V_P|}{|V_{SP}| + |V_P| - |V_{SP} \cap V_P|}.$$ In

some embodiments, different factors may have different weights. For example, weight$_A$ associated with construct similarity may be 0.5, weight$_B$ associated with type similarity may be 2.0, and weightc associated with variable-relationship use similarity may be 1.0.

In these or other embodiments, an aggregate

**EP 4 080 372 A1**

similarity score may be determined. The aggregate similarity score may be an aggregate of the overlapping node similarity scores. For example, the aggregate similarity score may be an average of the overlapping node similarity scores in some embodiments. As another example, the aggregate similarity score may be a raw sum of the overlapping node similarity scores or the raw sum normalized to a specific range (e.g., from "0" to "1"). The aggregate similarity score may indicate an overall degree of similarity between the revised bug pattern "$P_{revised}$" and the bug pattern "$P_{approx}$". The above is given as an example of computing the respective similarity score of the overlapping nodes. However, any other suitable technique for determining a degree of similarity may also be used.

At block 614, a distance "$D$" may be determined based on the similarity score. The distance "$D$" may be an inverse of the similarity score in some embodiments and accordingly may indicate a dissimilarity between the revised bug pattern "$P_{revised}$" and the bug pattern "$P_{approx}$". In some embodiments, the distance "$D$" may be determined by the following expression "$D = 1-$ sim.score".

In some embodiments, one or more of the operations 604, 606, 608, 610, 612, and 614 may be repeated until every revised bug pattern has been compared against the bug pattern "$P_{approx}$" of the selected post "$S$' to determine a dissimilarity between the selected post "$S$' and each of the revised bug patterns and corresponding clusters. In these or other embodiments, an aggregate dissimilarity determination may be made with respect to the selected post "$S$" and all the revised bug patterns. For example, in some embodiments, the respective distances between the selected post "$S$" and the respective revised bug patterns may be averaged, summed, or combined in any other suitable manner to determine the aggregate dissimilarity determination.

In these or other embodiments, the method 600 may be repeated for multiple of the unvisited posts to make dissimilarity determinations for each of the multiple unvisited posts. Additionally or alternatively, the method 600 may be performed for each of the unvisited posts.

One skilled in the art will appreciate that, for this and other processes, operations, and methods disclosed herein, the functions and/or operations performed may be implemented in differing order. Furthermore, the outlined functions and operations are only provided as examples, and some of the functions and operations may be optional, combined into fewer functions and operations, or expanded into additional functions and operations without detracting from the essence of the disclosed embodiments. In some embodiments, the method 600 may include additional blocks or fewer blocks. Further, the method 600 is merely given as an example technique for dissimilarity determinations. However, any number of other techniques may be used within the scope of the present disclosure.

FIG. 7 is a flowchart of an example method 700 of clustering posts based on revised bug patterns, according to at least one embodiment described in the present disclosure. The method 700 may be performed by any suitable system, apparatus, or device. By way of example, the system 120 of FIG. 1A, or the computing system 202 of FIG. 2 (e.g., as directed by one or more modules in some embodiments) may perform one or more of the operations associated with the method 500. Although illustrated with discrete blocks, the steps and operations associated with one or more of the blocks of the method 500 may be divided into additional blocks, combined into fewer blocks, or eliminated, depending on the particular implementation.

The method 700 may include a block 702, at which a revised bug pattern "$P_{revised}$" may be obtained. At block 704 an unvisited post "$S$" may be obtained. The unvisited post "$S$" may be a post that has not been analyzed with respect to selection for review or for revision of a corresponding bug pattern. The unvisited post may include a question post and corresponding answer posts in some embodiments. In these or other embodiments, the unvisited post "$S$" may include a buggy snippet "$Q$".

At block 706, it may be determined whether "$Q$" and "$P_{revised}$" satisfy a similarity threshold. For example, a first abstract program graph may be obtained for "$Q$" and a second abstract program graph may be obtained for "$P_{revised}$". In some embodiments, the first abstract program graph and the second abstract program graph may be obtained in an analogous manner as described above with respect to block 404 of FIG. 4.

In these or other embodiments, the first abstract program graph and the second abstract program graph may be compared to determine whether "$Q$" and "$P_{revised}$" satisfy a similarity threshold. In some embodiments, it may be determined that "$Q$" and "$P_{revised}$" satisfy the similarity threshold in response to the first abstract program graph and the second abstract program graph being isomorphic. Additionally or alternatively, it may be determined that "$Q$" and "$P_{revised}$" satisfy the similarity threshold in response to the second abstract program graph being subsumed by the first abstract program graph as a sub-graph of the second abstract program graph.

In response to "$Q$" and "$P_{revised}$" satisfying the similarity threshold, the method 700 may proceed from block 706 to block 708. At block 708, the post "$S$' may be added to a cluster associated with "$P_{revised}$". Following block 708, the method 700 may return to block 704, at which another post that has not been compared with "$P_{revised}$" may be selected.

Returning to block 706, in response to "$Q$" and "$P_{revised}$" not satisfying the similarity threshold, the method 700 may proceed from block 706 back to block 704. Upon the return to block 704 from block 706, another post that has not been compared with "$Q$" may be selected.

In some embodiments, one or more of operations 704, 706, and 708 may be repeated until every post has been compared against the revised bug pattern

"$P_{revised}$" to generate a cluster associated with "$P_{revised}$" Additionally or alternatively, the method 700 may be repeated with respect to any number of other revised bug patterns that may be selected as "$P_{revised}$" and compared against any number of other posts to generate other clusters that correspond to the respective revised bug patterns.

One skilled in the art will appreciate that, for this and other processes, operations, and methods disclosed herein, the functions and/or operations performed may be implemented in differing order. Furthermore, the outlined functions and operations are only provided as examples, and some of the functions and operations may be optional, combined into fewer functions and operations, or expanded into additional functions and operations without detracting from the essence of the disclosed embodiments. In some embodiments, the method 700 may include additional blocks or fewer blocks. Further, the method 700 is merely given as an example technique for determining occurrence rates of bug pattern types. However, any number of other techniques may be used within the scope of the present disclosure. For example, in some embodiments, rather than using buggy snippets associated with the selected posts, the operations may include obtaining a bug pattern associated with the selected posts and making similarity determinations with respect to the obtained bug pattern and the revised bug pattern.

As indicated above, the embodiments described in the present disclosure may include the use of a special purpose or general purpose computer (e.g., the processor 250 of FIG. 2) including various computer hardware or software modules, as discussed in greater detail below. Further, as indicated above, embodiments described in the present disclosure may be implemented using computer-readable media (e.g., the memory 252 or data storage 254 of FIG. 2) for carrying or having computer-executable instructions or data structures stored thereon.

As used in the present disclosure, the terms "module" or "component" may refer to specific hardware implementations configured to perform the actions of the module or component and/or software objects or software routines that may be stored on and/or executed by general purpose hardware (e.g., computer-readable media, processing devices, etc.) of the computing system. In some embodiments, the different components, modules, engines, and services described in the present disclosure may be implemented as objects or processes that execute on the computing system (e.g., as separate threads). While some of the systems and methods described in the present disclosure are generally described as being implemented in software (stored on and/or executed by general purpose hardware), specific hardware implementations or a combination of software and specific hardware implementations are also possible and contemplated. In this description, a "computing entity" may be any computing system as previously defined in the present disclosure, or any module or combination of modulates running on a computing system.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B." This interpretation of the phrase "A or B" is still applicable even though the term "A and/or B" may be used at times to include the possibilities of "A" or "B" or "A and B."

All examples and conditional language recited in the present disclosure are intended for pedagogical objects to aid the reader in understanding the present disclosure and the concepts contributed by the inventor to furthering the art, and are to be construed as being without limitation to such specifically recited examples and conditions. Although embodiments of the present disclosure have been described in detail, various changes, substitutions, and alterations could be made hereto without departing from the spirit and scope of the present disclosure.

**Claims**

1. A method comprising:

   obtaining a plurality of posts from one or more websites, each post including a respective buggy snippet of source code that includes a corresponding error;
   generating a plurality of bug patterns from the plurality of posts in which each respective bug pattern corresponds to a respective buggy snippet and indicates a corresponding bug scenario that leads to the corresponding error of the respective buggy snippet that corresponds to the respective bug pattern;
   determining similarities with respect to the respective bug patterns;
   selecting, based on the similarity determinations, a first bug pattern of the plurality of bug patterns for revision; and
   obtaining a revised bug pattern that is a revised version of the first bug pattern.

2. The method of claim 1, wherein selecting the first bug pattern based on the similarity determinations includes:

   determining an occurrence rate of a bug pattern type of the first bug pattern based on the similarity determinations; and
   selecting the first post based on the determined occurrence rate of the first bug pattern.

3. The method of claim 1, further comprising:

   determining a revised pattern similarity with respect to the revised bug pattern and a particular post of the plurality of posts;
   grouping the revised bug pattern and the particular post into a pattern cluster based on the revised pattern similarity; and
   removing the particular post and its corresponding bug pattern from selection consideration based on the particular post being included in the pattern cluster.

4. The method of claim 1, further comprising

   determining a dissimilarity with respect to the revised bug pattern and a second bug pattern of the plurality of bug patterns; and
   determining whether to select the second bug pattern for revision based on the dissimilarity determination.

5. The method of claim 4, further comprising determining to select the second bug pattern for revision in response to the determined dissimilarity satisfying a dissimilarity threshold.

6. The method of claim 4, further comprising determining not to select the second bug pattern for revision in response to the determined dissimilarity not satisfying a dissimilarity threshold.

7. The method of claim 4, wherein selecting the second bug pattern is further based on the similarity determinations.

8. A system comprising:

   one or more processors; and
   one or more non-transitory computer-readable storage media configured to store instructions that, in response to being executed by the one or more processors, cause the system to perform operations, the operations comprising:

      obtaining a plurality of posts from one or more websites, each post including a respective buggy snippet of source code that includes a corresponding error;
      generating a plurality of bug patterns from the plurality of posts in which each respective bug pattern corresponds to a respective buggy snippet and indicates a corresponding bug scenario that leads to the corresponding error of the respective buggy snippet that corresponds to the respective bug pattern;
      determining similarities with respect to the respective bug patterns;
      selecting, based on the similarity determinations, a first bug pattern of the plurality of bug patterns for revision; and
      obtaining a revised bug pattern that is a revised version of the first bug pattern.

9. The system of claim 8, wherein selecting the first bug pattern based on the similarity determinations includes:

   determining an occurrence rate of a bug pattern type of the first bug pattern based on the similarity determinations; and
   selecting the first post based on the determined occurrence rate of the first bug pattern.

10. The system of claim 8, the operations further comprising:

determining a revised pattern similarity with respect to the revised bug pattern and a particular post of the plurality of posts;

grouping the revised bug pattern and the particular post into a pattern cluster based on the revised pattern similarity; and

removing the particular post and its corresponding bug pattern from selection consideration based on the particular post being included in the pattern cluster.

11. The system of claim 8, the operations further comprising

determining a dissimilarity with respect to the revised bug pattern and a second bug pattern of the plurality of bug patterns; and

determining whether to select the second bug pattern for revision based on the dissimilarity determination.

12. The system of claim 11, the operations further comprising determining to select the second bug pattern for revision in response to the determined dissimilarity satisfying a dissimilarity threshold.

13. The system of claim 11, the operations further comprising determining not to select the second bug pattern for revision in response to the determined dissimilarity not satisfying a dissimilarity threshold.

14. The system of claim 11, wherein selecting the second bug pattern is further based on the similarity determinations.

15. One or more non-transitory computer-readable storage media configured to store instructions that, in response to being executed, cause a system to perform operations, the operations comprising:

obtaining a plurality of posts from one or more websites, each post including a respective buggy snippet of source code that includes a corresponding error;

generating a plurality of bug patterns from the plurality of posts in which each respective bug pattern corresponds to a respective buggy snippet and indicates a corresponding bug scenario that leads to the corresponding error of the respective buggy snippet that corresponds to the respective bug pattern;

determining similarities with respect to the respective bug patterns;

selecting, based on the similarity determinations, a first bug pattern of the plurality of bug patterns for revision; and

obtaining a revised bug pattern that is a revised version of the first bug pattern.

16. The one or more non-transitory computer-readable storage media of claim 15, wherein selecting the first bug pattern based on the similarity determinations includes:

determining an occurrence rate of a bug pattern type of the first bug pattern based on the similarity determinations; and

selecting the first post based on the determined occurrence rate of the first bug pattern.

17. The one or more non-transitory computer-readable storage media of claim 15, the operations further comprising:

determining a revised pattern similarity with respect to the revised bug pattern and a particular post of the plurality of posts;

grouping the revised bug pattern and the particular post into a pattern cluster based on the revised pattern similarity; and

removing the particular post and its corresponding bug pattern from selection consideration based on the particular post being included in the pattern cluster.

18. The one or more non-transitory computer-readable storage media of claim 15, the operations further comprising

determining a dissimilarity with respect to the revised bug pattern and a second bug pattern of the plurality of bug patterns; and

determining whether to select the second bug pattern for revision based on the dissimilarity determination.

19. The one or more non-transitory computer-readable storage media of claim 18, the operations further comprising determining to select the second bug pattern for revision in response to the determined dissimilarity satisfying a dissimilarity threshold.

20. The one or more non-transitory computer-readable storage media of claim 18, the operations further comprising determining not to select the second bug pattern for revision in response to the determined dissimilarity not satisfying a dissimilarity threshold.

**FIG. 1A**

**160**

```
UnsupportedOperationException

List $v = Arrays.asList(*);
$v.__{add|remove|clear|addAll|removeAll}__ (*);

List $v = Collections.singletonList(*);
$v.__{add|remove|clear|addAll|removeAll}__ (*);

CopyOnWriteArrayList $v;
Collections.sort($v);
```

**162**

```
ConcurrentModificationException

__{Collection, List, Map, Set}__ $v;
loop($v) {
    $v.__{add, remove, clear, addAll, removeall}__(*);
}

Iterator $v1 = __{Collection, List, Map, Set}__.iterator();
loop($v1.hasNext()) {
    *$v2 = $v1.next();
    $v1.remove();
}
```

**164**

```
ClassCastException

List $v1;
*[] $v2 = (*[]) $v1.toArray();

URL $v1;
(HttpURLConnection) $v1.openConnection();

* $v;
(__{Long, Double, Integer}__) $v;

String $v1; * $v2;
String.format($v1, $v2);

(Activity) *.getContext();
```

**166**

```
IllegalArgumentException

ProgressDialog $v;
$v.dismiss();

Object $v1;
$v1.wait(NEGATIVE);

String $v1, $v2;
URLDecoder.decode($v1, $v2);
```

*FIG. 1B*

EP 4 080 372 A1

Computing System
202

Processor
250

Memory
252

Data Storage
254

FIG. 2

*300*

Obtain Posts *302*

Generate Bug Patterns Based On The Posts *304*

Determine Similarities Between Bug Patterns *306*

Select A Bug Pattern For Revision *308*

*FIG. 3*

Obtain Buggy Snippet "$Q$" And Example Snippet "$A$" — 402

Build Abstract Program Graph (APG) of $Q$ And $A$ — 404

Align $Q_{APG}$ And $A_{APG}$ — 406

Prune $Q$ — 408

Modify Pruned Snippet $Q$ For Contextual Completeness — 410

Use Modified Snippet As Bug Pattern For Post — 412

*FIG. 4*

500

502

Obtain Posts And Corresponding Bug Patterns

504

Select First Post *S1*

506

Select Second Post *S2*

508

Do *S1* And *S2* Have
Same Bug Pattern Type?

No

Yes

510

Update Support Determination

**FIG. 5**

600

| Select Unvisited Post $S$ | 602 |

| Select Human-Visited Cluster $C$ | 604 |

| Get Bug Pattern $\mathcal{P}_{revised}$ From $C$ | 606 |

| Get Auto-Extracted Bug Pattern $\mathcal{P}_{approx}$ From $S$ | 608 |

| Build APG Of $\mathcal{P}_{revised}$ And $\mathcal{P}_{approx}$ | 610 |

| Compute Similarity Score Between $\mathcal{P}_{revised}$ And $\mathcal{P}_{approx}$ | 612 |

| Determine Distance $\mathcal{D}$ | 614 |

**FIG. 6**

EP 4 080 372 A1

FIG. 7

Europäisches
Patentamt

European
Patent Office

Office européen
des brevets

**EUROPEAN SEARCH REPORT**

**Application Number**

**EP 22 16 7106**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GAO QING ET AL: "Fixing Recurring Crash Bugs via Analyzing Q&A Sites (T)", 2015 30TH IEEE/ACM INTERNATIONAL CONFERENCE ON AUTOMATED SOFTWARE ENGINEERING (ASE), IEEE, 9 November 2015 (2015-11-09), pages 307-318, XP032846376, DOI: 10.1109/ASE.2015.81 [retrieved on 2016-01-04] | 1,4-8, 11-15, 18-20 | INV. G06F11/36 G06F8/33 |
| Y | * page 307 - page 315 * | 2,3,9, 10,16,17 | |
| Y | SONAL MAHAJAN ET AL: "Recommending Stack Overflow Posts for Fixing Runtime Exceptions using Failure Scenario Matching", ARXIV.ORG, CORNELL UNIVERSITY LIBRARY, 201 OLIN LIBRARY CORNELL UNIVERSITY ITHACA, NY 14853, 21 September 2020 (2020-09-21), pages 1-13, XP081768321, DOI: 10.1145/3368089.3409764 * page 1 - page 11 * | 2,3,9, 10,16,17 | |
| A | HANAM QUINN QHANAM@ECE UBC CA ET AL: "Discovering bug patterns in JavaScript", PARTIAL EVALUATION AND PROGRAM MANIPULATION, ACM, 2 PENN PLAZA, SUITE 701 NEW YORK NY 10121-0701 USA, 1 November 2016 (2016-11-01), pages 144-156, XP058697386, DOI: 10.1145/2950290.2950308 ISBN: 978-1-4503-4721-1 * page 144 - page 153 * | 1-20 | |
| X,P | US 2022/043738 A1 (MAHAJAN SONAL [US] ET AL) 10 February 2022 (2022-02-10) * the whole document * | 1-20 | |

TECHNICAL FIELDS SEARCHED (IPC)

G06F

-/--

The present search report has been drawn up for all claims

| Place of search | Date of completion of the search | Examiner |
|---|---|---|
| Munich | 16 August 2022 | Noll, Joachim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**page 1 of 2**

Europäisches
Patentamt

European
Patent Office

Office européen
des brevets

## EUROPEAN SEARCH REPORT

Application Number

EP 22 16 7106

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,P | EP 3 974 964 A1 (FUJITSU LTD [JP]) 30 March 2022 (2022-03-30) * the whole document * ----- | 1-20 | |

TECHNICAL FIELDS
SEARCHED        (IPC)

The present search report has been drawn up for all claims

| Place of search | Date of completion of the search | Examiner |
|---|---|---|
| Munich | 16 August 2022 | Noll, Joachim |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.....................................................................

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 22 16 7106

This annex lists the patent family members relating to the patent documents cited in  the above-mentioned European search report.
The members are as contained in the European Patent Office EDP file on
The European Patent Office is in no way liable for these particulars which are merely given for the purpose of information.

16-08-2022

| Patent document cited in search report | | Publication date | Patent family member(s) | | Publication date |
|---|---|---|---|---|---|
| US 2022043738 | A1 | 10-02-2022 | JP 2022029423 | A | 17-02-2022 |
| | | | US 2022043738 | A1 | 10-02-2022 |
| EP 3974964 | A1 | 30-03-2022 | EP 3974964 | A1 | 30-03-2022 |
| | | | JP 2022052734 | A | 04-04-2022 |
| | | | US 2022091963 | A1 | 24-03-2022 |

EPO FORM P0459

For more details about this annex : see Official Journal of the European Patent Office, No. 12/82

EP 4 080 372 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 55006919